# FASCICULE DE BREVET EUROPEEN

(11) **EP 2 161 818 B1**
(45) Date de publication et mention de la délivrance du brevet: **17.07.2019**
(21) Numéro de dépôt: 09169116.2
(22) Date de dépôt: 01.09.2009
(51) Int. Cl.: H02K 11/28, E06B 9/72

(54) **Actionneur pour écran domotique, procédé et outil de configuration d'un tel actionneur**
Stellglied für Haustechnikbildschirm, Verfahren und Konfigurationsinstrument eines solchen Stellglieds
Actuator for home-automation screen, tool and method for configuring such an actuator

(30) Priorité: 01.09.2008 FR 0855836
(43) Date de publication de la demande: 10.03.2010
(73) Titulaire: Window Automation Industry Srl, 40015 Galliera (BO) (IT)
(72) Inventeur: Ghermandi, Alessandro, 40137, Mirandola (MO) (Italie) (IT); Taruffi, Luca, 40127, Bolagna (Italie) (IT)
(74) Mandataire: Lavoix

(56) Documents cités:
- EP-A- 1 130 211
- EP-A- 1 577 486
- WO-A-2004/007891
- DE-U1- 20 116 512
- DE-U1- 29 917 387

## Description

L'invention concerne un actionneur domotique destiné à déplacer un écran entre une position ouverte et une position fermée. Ainsi, une extrémité, dite mobile, de cet écran parcourt une course délimitée par une première position de fin de course correspondant à la position ouverte et par une deuxième position de fin de course correspondant à la position fermée. De tels écrans motorisés peuvent être des volets roulants, des portes de garage, des stores vénitiens. L'invention concerne également le procédé de configuration de telles positions de fin de course.

Lorsque l'extrémité mobile d'un écran atteint une position de fin de course, l'actionneur doit arrêter le déplacement de l'écran, faute de quoi, l'écran ou sa structure risque d'être détérioré. Pour cela, une solution courante consiste à déterminer continuellement la position de l'extrémité mobile et à ordonner l'arrêt de l'écran dès qu'une position de fin de course est atteinte. Certains actionneurs prévoient ainsi des dispositifs mécaniques pour assurer ce comptage et le réglage des fins de course, comme c'est le cas dans les brevets FR-A-1 487 414 ou FR-B-2 688 022. Ces dispositifs sont généralement volumineux. Ils comprennent des boutons de réglage souvent difficilement manoeuvrables, une fois l'actionneur installé. D'autres actionneurs comprennent des dispositifs mécatroniques pour lesquels une cinématique mécanique de comptage, de type couronne ou rotor, coopère avec des capteurs dont les signaux sont traités électroniquement. Le réglage des fins de course peut être obtenu à distance, par voie filaire ou radio, à partir d'un organe de commande. Suite à une opération spécifique sur l'organe de commande, provoquant l'émission d'un signal particulier, l'unité de traitement électronique traite ce signal comme un ordre de basculement dans un mode d'apprentissage d'au moins une position de fin de course. Dans ce mode, l'actionneur n'a pas de fins de course enregistrées ou a une seule fin de course. L'écran peut donc être déplacé par l'organe de commande sans aucune limite, au moins dans un sens. Grâce à l'organe de commande, l'installateur positionne l'extrémité mobile au niveau d'une fin de course souhaitée. Puis, suite à une opération de validation spécifique, il enregistre cette position comme position de fin de course pour un sens de mouvement de l'écran. Dès lors, tout déplacement de l'écran dans ce sens est limité par cette fin de course, en mode d'utilisation normale. L'enregistrement de la deuxième fin de course est analogue. Une fois ces limites enregistrées, une seconde opération spécifique permet de revenir dans un mode normal d'utilisation. Dans ce cas, l'ergonomie pour entrer dans un mode de réglage est souvent complexe et non intuitive. Le traitement électronique est également compliqué et coûteux. De plus, une mauvaise opération au niveau de l'organe de commande en utilisation normale peut entraîner un déréglage des fins de course.

Alternativement, certains actionneurs intègrent un simple bouton d'activation du mode électronique de réglage au niveau de l'actionneur. Dans ce cas, l'ergonomie de réglage est plus simple et les risques de mauvaise manipulation réduits. Ainsi, pour basculer l'unité de traitement électronique dans un mode de réglage, il suffit d'actionner le bouton d'activation. Un tel dispositif est décrit dans les demandes de brevet EP-A-1130 211 et WO-A-2004/007891. Cette solution présente néanmoins un inconvénient analogue aux dispositifs mécaniques, à savoir, un risque d'entrée d'eau au niveau du bouton d'activation ou des boutons de réglage. Pour lever ce risque, il faut prévoir l'étanchéité du bouton, ce qui s'avère souvent difficile et/ou coûteux dès lors que le bouton nécessite une course d'actionnement.

Selon une autre approche, il est connu de EP-A-1 577 486 de détecter une butée physique pour faire basculer un actionneur en mode d'apprentissage. Cette approche est peu précise et peut induire des passages intempestifs en mode d'apprentissage.

L'invention propose un actionneur intégrant un dispositif de comptage mécatronique apte à gérer les fins de course ainsi qu'un procédé de configuration de cet actionneur pour régler les positions de fin de course à considérer.

A cet effet, l'invention concerne un actionneur d'un écran domotique comprenant une unité de traitement permettant le pilotage du déplacement d'une extrémité mobile de l'écran entre deux positions de fin de course, cette unité de traitement étant supportée par un circuit comprimé et comprenant au moins un moyen de basculement qui, une fois activé et alors qu'un signal est transmis à l'unité de traitement via le circuit imprimé, permet de faire basculer l'unité de traitement dans un mode d'apprentissage d'au moins une position de fin de course. Cet actionneur est caractérisé en ce qu'il comprend un logement destiné à recevoir un moyen d'activation du moyen de basculement dans une configuration où le moyen d'activation, mis en place dans le logement, agit directement sur le moyen de basculement pour l'activer, en étant proche du moyen de basculement et sans être en contact direct avec celui-ci, alors que le moyen d'activation fait partie d'un outil qui peut être utilisé pour faire basculer les unités de traitement de plusieurs actionneurs, en étant successivement introduit dans les logements de ces actionneurs. En outre, une paroi d'isolation formant un fond du logement est disposée entre le moyen de basculement et le moyen d'activation reçu dans le logement, alors que le moyen de basculement est un élément réagissant à la présence d'un aimant ou à un flux lumineux et alors que le moyen d'activation est une surface active terminale d'un aimant, disposée en extrémité de l'outil de configuration, ou un flux lumineux, le moyen de basculement étant activé par le moyen d'activation à travers la paroi d'isolation.

L'actionneur comprend ainsi une unité de traitement électronique destiné à piloter l'alimentation du moteur en fonction des ordres reçus d'un organe de commande et/ou en fonction de la position de l'écran, mesurée par un dispositif de comptage. Celui-ci transmet des signaux à un capteur permettant de définir la position de l'écran. Ainsi, il est possible de déterminer si une extrémité mobile de l'écran se situe dans la course délimitée par deux positions de fin de course. Si l'extrémité mobile atteint une limite, l'unité de traitement du module électronique ordonne l'arrêt du moteur. Pour régler ces limites, l'unité de traitement électronique comprend au moins un moyen de basculement spécifique permettant le basculement de l'unité dans un mode d'apprentissage d'au moins une position de fin de course. Ce moyen de basculement spécifique est uniquement dédié au basculement dans un mode d'apprentissage. Il ne s'agit pas d'un moyen utilisable pour d'autres fonctions comme ce pourrait être le cas lorsque le basculement est obtenu par le traitement d'un signal radio particulier. Dans ce dernier cas, le récepteur radio constituant le moyen de basculement n'est pas spécifique. Il est commun avec une fonction de commande radio de l'actionneur. Avec un moyen de basculement spécifique, on s'affranchit des risques d'erreur suite à une opération involontaire, on évite les mauvaises manipulations pouvant activer malencontreusement le moyen de basculement.

Selon l'invention, le moyen de basculement spécifique est activé par un moyen d'activation uniquement lorsqu'il est proche du moyen de basculement et sans être en contact avec celui-ci. Au sens de la présente invention, deux moyens sont proches s'ils peuvent interagir ensemble, notamment par voie magnétique. En pratique, une telle proximité correspond à un écart entre ces moyens qui est inférieur à quelques centimètres, de préférence 40 mm.

Du fait de la proximité exigée entre le moyen d'activation et le moyen de basculement, préférentiellement dans une zone située à moins de 40 mm l'un de l'autre, on s'assure que le moyen d'activation ne perturbe pas le fonctionnement d'autres éléments de l'actionneur ou plus particulièrement de l'unité de traitement. Cela s'avère d'autant plus vrai lorsque le moyen de basculement est activé par un champ magnétique. En effet, il est fréquent d'utiliser des capteurs à effets Hall pour assurer une autre fonction comme le comptage de la rotation du tube d'enroulement. Aussi, pour ne pas observer de disfonctionnement de l'actionneur, il est prévu que l'activation du moyen de basculement n'est possible que lorsque le moyen d'activation est proche de celui-ci mais assez éloigné d'autres composants dont le fonctionnement pourrait être perturbé par la proximité du moyen d'activation. D'autre part, la possibilité d'activer à distance et sans contact le moyen de basculement permet d'améliorer l'isolation du moyen de basculement et, en conséquence, du dispositif. En effet, en disposant une paroi d'isolation entre le moyen d'activation et le moyen de basculement, le dispositif peut être étanche à un élément extérieur tel que l'eau ou la poussière. Afin d'actionner le moyen de basculement à travers la paroi, l'activation par champ magnétique s'avère particulièrement adaptée. Ainsi, le moyen de basculement peut être un élément réagissant à la présence d'un aimant constituant le moyen d'activation. Ce type d'élément, telle qu'un capteur à effet Hall, est préférentiellement disposé sur un circuit imprimé supportant l'unité de traitement. Le dispositif est alors très simple à réaliser et peu encombrant. Pour améliorer l'ergonomie, l'unité de traitement peut astucieusement comprendre deux moyens de basculement, un pour chaque position de fin de course à régler. Le réglage est plus intuitif et plus simple. Pour apprendre une position de fin de course particulière, il suffit alors d'activer seulement un moyen de basculement particulier. Une opération de configuration n'affecte donc qu'une seule fin de course. Il n'y a donc pas de risque de dérégler l'autre position de fin de course. Préférentiellement, un logement ou marquage indique l'emplacement du moyen de basculement pour que l'installateur positionne correctement le moyen d'activation et active effectivement le bon moyen de basculement. D'autre part, le moyen d'activation est avantageusement disposé en extrémité d'un outil de configuration. Le moyen de basculement est préférentiellement disposé sur un circuit imprimé supportant l'unité de traitement.

L'invention a également trait à un procédé de configuration de plusieurs actionneurs tels que mentionnés ci-dessus. Une première étape de ce procédé consiste à déplacer un moyen d'activation, formé par une surface active terminale d'un aimant ou un flux lumineux, jusqu'à une position d'activation où ce moyen d'activation, mis en place dans le logement de l'actionneur, agit directement sur le moyen de basculement à travers une paroi de fond de ce logement, en étant proche de ce moyen de basculement et sans être en contact direct avec ce dernier. Cette étape est répétée pour les différents actionneurs.

Lorsqu'on approche le moyen d'activation à proximité du moyen de basculement, celui-ci détecte la présence du moyen d'activation dans une zone proche. Puis le moyen de basculement provoque le basculement de l'unité de traitement dans un mode d'apprentissage. Ce basculement peut être conditionné au fait que la distance entre le moyen d'activation et le moyen de basculement a une valeur inférieure à une valeur prédéterminée, par exemple 40 mm. Il suffit alors de placer l'extrémité mobile dans la position souhaitée et d'enregistrer la fin de course correspondante. La validation de l'enregistrement d'une fin de course est ensuite réalisée par une opération spécifique. Celle-ci peut être la désactivation du moyen de basculement, c'est à dire, l'éloignement du moyen d'activation du moyen de basculement. Cette action est très simple et compréhensible d'un point de vue ergonomique. Dans ce cas, le moyen de basculement est constamment activé pendant le réglage de la fin de course. Pour sécuriser l'action, la validation peut exiger, en plus ou à la place de la désactivation du moyen de basculement, l'exécution d'un ordre spécifique à partir d'un organe de commande de l'actionneur. Par exemple, ce peut être l'appui sur la touche « montée » pour valider la position de la fin de course haute de l'écran ou sur la touche « descente » pour valider la position de la fin de course basse. Eventuellement, l'enregistrement n'est validé que si l'opération spécifique est effectuée dans un temps déterminé.

Le basculement de l'unité de traitement dans un mode d'apprentissage peut également être réalisé dès que le moyen d'activation est continuellement à proximité du moyen de basculement pendant un temps déterminé. Par exemple, en approchant le moyen d'activation quelques secondes à proximité du moyen de basculement, cela suffit pour basculer en mode apprentissage. Le moyen d'activation peut alors être retiré, l'unité de traitement reste configurée en mode apprentissage. Le réglage du ou des fins de course peut être réalisé sans que le moyen de basculement soit activé. La validation de l'enregistrement du ou des fins de course nécessite également une opération spécifique qui peut être l'activation du moyen de basculement pendant une durée déterminée ou un ordre spécifique de l'organe de commande.

L'invention concerne enfin un outil de configuration d'un actionneur pour un écran domotique, notamment un actionneur tel que mentionné ci-dessous. Cet outil comprend un moyen d'activation formé par une surface active terminale d'un aimant et monté à l'extrémité d'une tige, ce moyen d'activation permettant d'activer un moyen de basculement d'un actionneur tel que mentionné ci-dessus, en mettant en oeuvre le procédé mentionné ci-dessus.

Avantageusement la tige de cet outil est flexible et/ou articulée.

L'invention sera mieux comprise à la lecture de la description qui va suivre, donnée uniquement à titre d'exemple et faite en se référant aux dessins annexés sur lesquels :
- la figure 1 est une vue partielle schématique d'un actionneur et d'un outil de configuration avec lesquels peut être mise en oeuvre l'invention ;
- la figure 2 est une vue de face de l'actionneur dans lequel l'outil de configuration est mis en place ;
- la figure 3 est une coupe partielle selon la ligne I-I à la figure 2
- la figure 4 est une vue à plus grande échelle du détail A de la figure 3 ;
- la figure 5 est un ordinogramme illustrant un procédé de configuration selon l'invention ;
- la figure 6 est un ordinogramme complémentaire à l'ordinogramme de la figure 5 introduisant de nouvelles fonctionnalités ;
- la figure 7 est un ordinogramme complémentaire à l'ordinogramme de la figure 6 introduisant de nouvelles fonctionnalités ;
- la figure 8 est un ordinogramme partiel pour une variante de l'ordinogramme de la figure 6 correspondant à un premier procédé conforme à l'invention ;
- la figure 9 est un ordinogramme partiel pour une variante de l'ordinogramme de la figure 6 correspondant à un deuxième procédé conforme à l'invention.

L'invention est applicable à différents types d'écrans dont une extrémité mobile se déplace entre deux positions de fin de course. L'exemple décrit ci-après correspond à un actionneur tubulaire pour un type d'écran, à savoir les écrans enroulables.

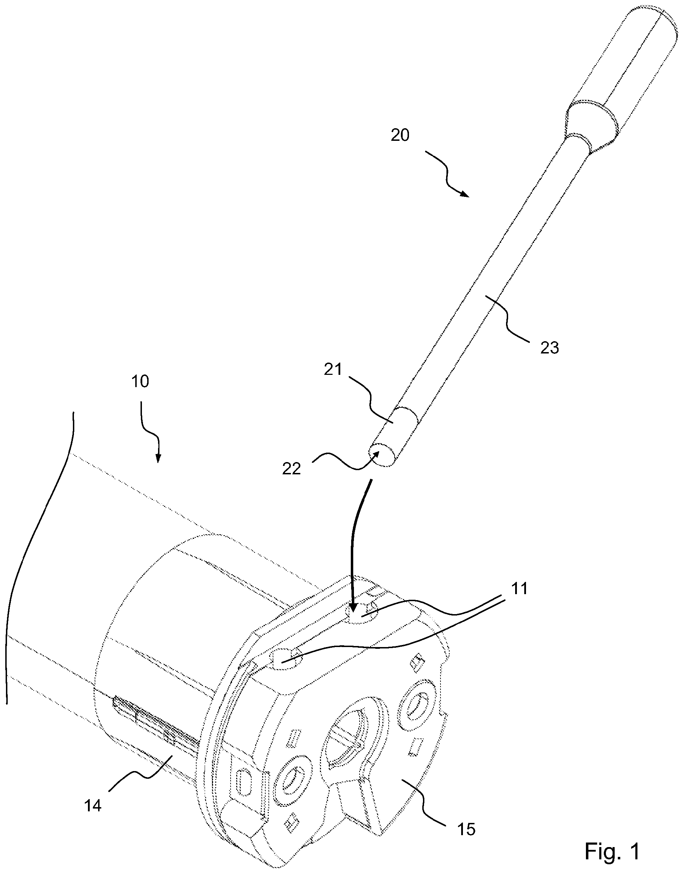

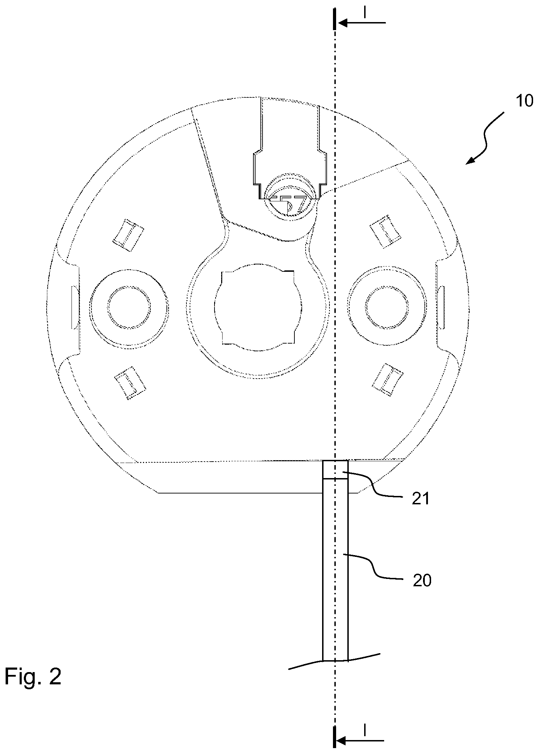

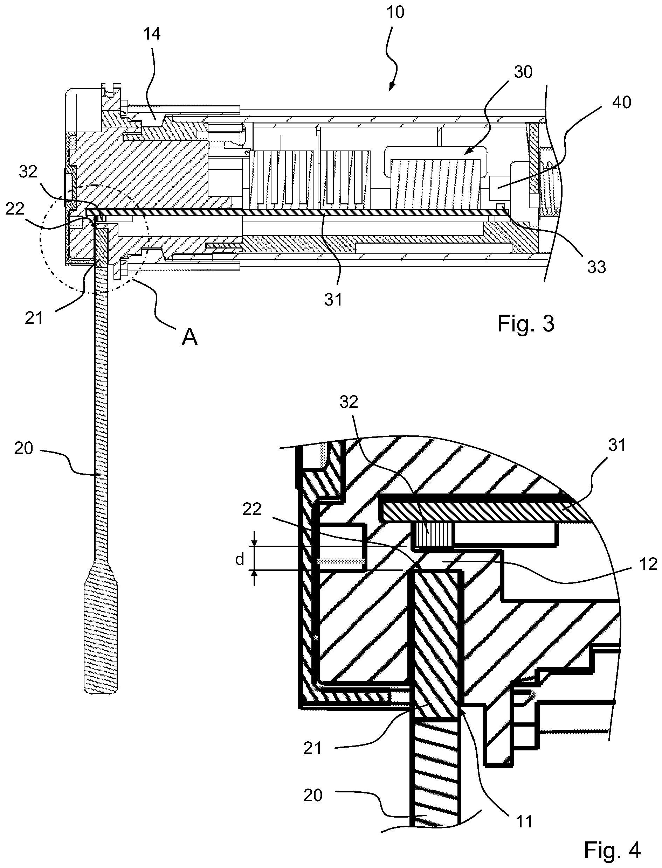

Les figures 1 à 4 représentent l'extrémité d'un tel actionneur tubulaire 10 et un outil de configuration 20 permettant le réglage des fins de course selon l'invention. Un actionneur tubulaire est destiné à être introduit dans un tube, non représenté, d'enroulement d'un écran, également non représenté, qu'il entraîne en rotation via une de ses extrémités. L'autre extrémité 15 de l'actionneur 10, visible sur la figure 1, se fixe sur la structure de bâtiment.

Souvent, une fois l'actionneur installé sur site, une telle extrémité est difficilement accessible. En conséquence, lorsqu'il faut régler les fins de courses de l'écran, c'est à dire, enregistrer la position des fins de course dans une unité de traitement de l'actionneur, l'accès aux boutons de réglage s'avère difficile. En effet, pour ce type d'actionneur, cette extrémité est la seule interface accessible par l'installateur. Aussi, lorsque l'extrémité est confinée dans un caisson, le réglage est d'autant moins évident que la configuration nécessite le mouvement d'un outil, comme la rotation d'un tournevis par exemple.

L'actionneur 10 conforme à l'invention est équipé d'une unité électronique 30 de traitement de données, cette unité étant apte à commander le fonctionnement de l'actionneur 10.

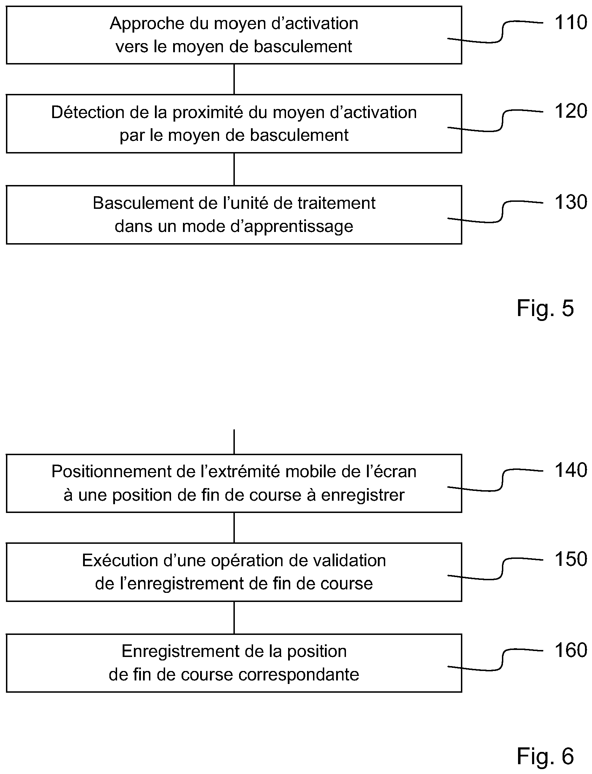

L'invention propose de simplifier le procédé de configuration des fins de course. Pour basculer l'unité de traitement dans un mode d'apprentissage d'une fin de course, le procédé comprend les étapes suivantes, illustrées à la figure 5 :
Dans une première étape 110, l'installateur approche un moyen d'activation 22 vers un moyen de basculement 32 de l'unité de traitement 30 en mode d'apprentissage de fin de course. Dans l'exemple, le moyen d'activation 22 est une surface active terminale d'un aimant 21 disposé en extrémité de l'outil de configuration 20. L'outil de configuration peut comprendre une tige 23 flexible, en matière souple et/ou articulée, de sorte à pouvoir facilement se glisser à l'intérieur de caisson et contourner les éventuels obstacles à l'accès à l'extrémité 15 de l'actionneur 10.

Dans une deuxième étape 120, le moyen de basculement 32 détecte la proximité du moyen d'activation 22 provoquant ainsi le basculement de l'unité de traitement 30 dans le mode d'apprentissage, ce qui se produit lors d'une troisième étape 130.

Le basculement en mode d'apprentissage est généralement soumis à une condition. Par exemple, lors de l'étape 130, le basculement de l'unité 30 en mode d'apprentissage peut être soumis au fait que la distance d entre les moyens 22 et 32 a une valeur inférieure à une valeur prédéterminée do, par exemple égale à 40 mm, lorsque l'aimant 21 est en place dans le logement 11. Ensuite l'unité de traitement 30 reste en mode apprentissage tant que le moyen de d'activation 22 est détecté à proximité du moyen de basculement 32, c'est-à-dire tant que le moyen d'activation n'est pas retiré du logement 11.

En variante, l'unité de traitement bascule 30 en mode d'apprentissage dès que le moyen d'activation 22 est détecté, de façon continue, à proximité du moyen de basculement 32 pendant un intervalle de temps supérieur à une durée Δt₁ déterminée, par exemple 4 secondes. Puis l'unité 30 reste dans ce mode d'apprentissage. Peu importe que le moyen de d'activation 22 reste ensuite dans le logement 11, à proximité du moyen de basculement 32, ou non.

Le logement 11 permet donc de recevoir temporairement le moyen d'activation 22 lorsqu'il convient de faire basculer l'unité de traitement 30 en mode d'apprentissage, alors que l'outil de configuration peut ensuite être éloigné de l'actionneur 10. Un même outil 20 peut donc être utilisé pour plusieurs actionneurs 10.

Le moyen de basculement 32 illustré est un élément réagissant à un champ magnétique induit par la surface 22, cet élément étant disposé sur un circuit imprimé 31 supportant l'unité de traitement 30. Cet élément est un capteur à effet Hall. En variante il peut s'agir d'une ampoule Reed, d'un interrupteur à lame souple (ILS) ou d'un autre dispositif activable par un champ magnétique.

La surface terminale 22 de l'aimant 21 agit magnétiquement directement sur le capteur 32, sans utilisation de pièce intermédiaire fixe ou mobile. L'activation du capteur 32 est simple, donc économique, et fiable.

Une fois le champ magnétique généré par la surface 22 de l'aimant 21 détecté par le capteur 32, un signal est transmis à l'unité de traitement 30 via le circuit 31. L'unité 30 peut alors entrer dans un mode dit « d'apprentissage » permettant la configuration des fins de course. Le moyen d'activation 22 doit donc être correctement positionné pour activer le moyen de basculement 32. A cet effet, il est prévu un logement 11 au niveau de l'extrémité 15 de l'actionneur 10. Ce logement matérialise l'emplacement du moyen de basculement 32. Dans le mode de réalisation représenté, le logement est un trou cylindrique destiné à recevoir l'aimant cylindrique 21. Son diamètre est légèrement supérieur à celui de l'aimant. Alternativement, le logement peut prendre une autre forme. Ce peut n'être qu'un marquage sur une surface plane.

Compte tenu de la nature de l'élément 32, la détection de la surface 22 a lieu sans contact direct entre les parties 22 et 32. Ce mode de détection à distance permet de prévoir une isolation du moyen de basculement 32 par rapport à l'environnement extérieur et à l'outil 20. Il s'agit d'une paroi 12 formant le fond du logement 11.

Ainsi, lors de l'étape 110, le moyen d'activation 22 est amené dans une position où il est proche du moyen de basculement 32, sans toutefois être en contact direct avec celui-ci.

Pour assurer un bon fonctionnement de l'actionneur 10, l'unité de traitement 30 doit pouvoir déterminer la position de l'extrémité mobile de l'écran en absolu ou en relatif, par rapport à un point de référence tel qu'une fin de course. L'unité de traitement 30 est donc généralement associée à un dispositif de comptage. Selon le mode de réalisation représenté, le comptage est réalisé au niveau d'un rotor 40 solidaire en rotation de l'arbre de sortie d'un moteur électrique non représenté. Le rotor est muni d'un marqueur, non représenté, disposé sur la surface périphérique extérieure du rotor. Ce marqueur est disposé de manière à être régulièrement en vis-à-vis d'un capteur 33 implanté sur le circuit imprimé 31. Ainsi, le capteur détecte le nombre de passages du marqueur et permet de compter le nombre de tours effectué par le rotor 40. L'unité de traitement 30 peut alors déterminer le nombre de tours du tube d'enroulement et en déduire la position de l'extrémité mobile de l'écran.

Ce dispositif de comptage, parfois dénommé « comptage rotor », présente de nombreux avantages, notamment avec le procédé de configuration décrit précédemment. Il est simple et permet de réduire la taille du dispositif de comptage par rapport à un système de comptage utilisant une couronne-palier et un mécanisme de réduction. De plus, il offre une bonne précision de détermination de la position de l'écran et il ne présente pas de limite capacitaire, ce qui le rend compatible avec des écrans couvrant des grandes ouvertures. Avec un dispositif de comptage indépendant de la couronne-palier 14, l'isolation de l'unité de traitement 30 et des éléments 31 et 32 vis-à-vis de l'extérieur est plus facile à réaliser car il n'y a pas d'éléments en mouvement à rendre étanche.

En outre, le champ magnétique de l'outil de configuration ne risque pas de perturber le capteur 33 généralement sensible aux champs magnétiques. Ce type de capteur comprend en effet souvent une ou deux cellules à effet Hall. En disposant le capteur 33 au voisinage du rotor 40, c'est à dire, de l'autre coté du circuit imprimé 31 par rapport au moyen de basculement 32, le risque d'interférences magnétiques entre les éléments 32 et 33 est fortement réduit.

Pour enregistrer une position de fin de course, le procédé représenté à la figure 5 se poursuit par la partie de procédé représentée à la figure 6.

Dans une quatrième étape 140, l'installateur pilote l'actionneur de manière à positionner l'extrémité mobile de l'écran jusqu'à atteindre une position de fin de course à enregistrer. Le pilotage est généralement réalisé par un organe de commande déjà apparié avec l'actionneur 10, tel qu'une télécommande ou un interrupteur mural. Dans ce mode de configuration, il n'y a pas de fin de course de sécurité. L'écran doit donc être manoeuvré en faisant attention pour ne pas détériorer l'écran ou sa structure.

Dans une cinquième étape 150, l'installateur exécute une opération de validation de l'enregistrement de fin de course. Cette action a pour effet de déclencher l'enregistrement de la position de fin de course correspondante dans une mémoire de l'unité de traitement 30, ce qui a lieu dans à une sixième étape 160.

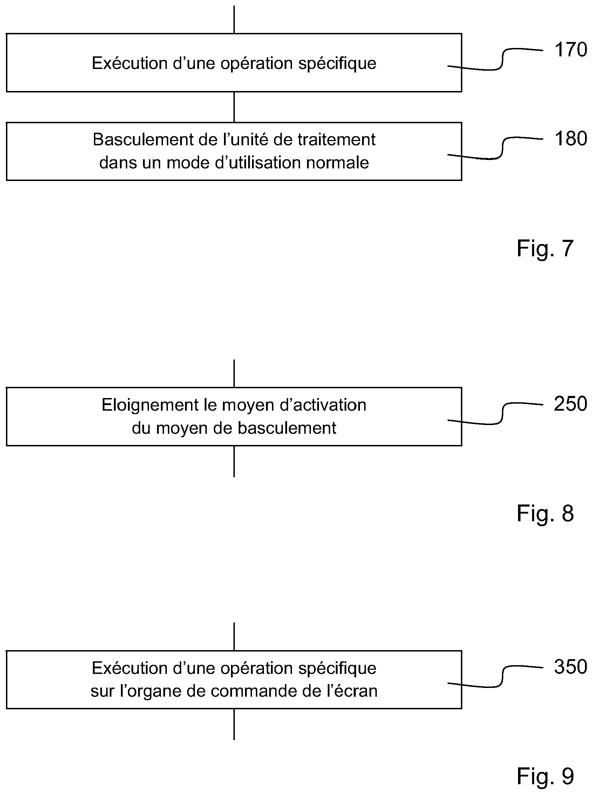

L'opération de validation de l'étape 150 peut consister à éloigner le moyen d'activation 22 du moyen de basculement 32, comme indiqué à l'étape 250 de la figure 8. Cette étape se substitue alors à l'étape 150. L'éloignement entre les éléments 22 et 32 provoque la désactivation du moyen de basculement 32. Celui-ci n'émet alors plus de signal, ce qui est interprété comme une validation de l'enregistrement. L'unité de traitement 30 détermine alors la position de l'extrémité mobile et enregistre cette valeur comme fin de course dans le sens souhaité.

L'opération de validation peut également consister en l'exécution d'une opération spécifique sur l'organe de commande de l'écran, comme indiqué à l'étape 350 de la figure 9. Cette étape se substitue alors à l'étape 150. Par exemple, on peut valider une fin de course haute en appuyant sur les touches « montée » et « stop » lorsqu'on est dans le mode d'apprentissage.

L'opération de validation de l'étape 150 peut aussi être une combinaison des opérations précédentes. Par exemple, une fois l'écran positionné, l'installateur éloigne le moyen d'activation 22 du moyen de basculement 32. Puis, il appuie sur une touche, telle que la touche « montée », pour valider l'enregistrement de la fin de course, la fin de course haute dans cet exemple.

Une autre opération spécifique de validation consiste à approcher de nouveau le moyen d'activation 22 près du moyen de basculement 32 pendant une durée Δt₂ déterminée, par exemple 8 secondes.

Suite à l'opération de validation 150, 250 ou 350, il est avantageux qu'un retour d'information soit réalisé afin de signifier à l'installateur que son opération a bien été prise en compte et que la fin de course a bien été enregistrée. Ce retour d'information peut être un va-et-vient de l'écran ordonné par l'unité de traitement 30.

Pour sortir du mode d'apprentissage, le procédé précédent se poursuit par les étapes décrites à la figure 7.

Dans une septième étape 170, l'installateur exécute une opération spécifique. Cette opération peut être exécutée au niveau de l'organe de commande de l'écran, par exemple par une séquence d'appuis sur des touches spécifiques, ou simplement par l'éloignement du moyen d'activation 22 par rapport au moyen de basculement 32. Cette opération spécifique est alors interprétée par l'unité de traitement 30 comme un ordre de basculement dans un mode d'utilisation normale, ce qui a lieu dans une huitième étape 180.

Ce procédé se trouve fortement simplifié et plus intuitif quand l'actionneur dispose de deux moyens de basculement, un pour chaque position de fin de course haute ou basse à enregistrer, comme c'est d'ailleurs le cas dans le mode de réalisation décrit où deux logements 11 sont visibles à la figure 1. L'aimant 21 peut être introduit dans l'un de ces logements 11 pour régler une fin de course haute ou dans l'autre logement pour régler une fin de course basse. Dans ce cas, deux moyens de basculement 32 sont prévus, chacun au voisinage d'une paroi de fond d'un des logements 11.

Cependant, l'actionneur peut n'inclure qu'un moyen de basculement. Dans ce cas, l'ergonomie de configuration s'avère un peu plus délicate mais reste envisageable.

Dans l'exemple représenté, l'unité de traitement 30 est intégrée dans l'actionneur 10. On peut toutefois imaginer une unité de traitement déportée.

De plus, le moyen de basculement 32 n'est pas nécessairement activé par un champ magnétique, il peut être activé par d'autres moyens, un flux lumineux par exemple.

En variante, le moyen d'activation 22 est cinématiquement lié à l'actionneur 10 ce qui permet de configurer l'actionneur rapidement sans devoir rechercher un outil spécifique.

Pour améliorer la mise en place de l'outil de configuration 20 dans son logement 11, il peut être prévu, à l'entrée du logement, dans le cas d'un trou, un anneau ferromagnétique destiné à pré-orienter l'aimant 21 constituant le moyen d'activation 22.

L'installateur décrit précédemment fait référence à une personne souhaitant régler une ou deux fins de course de l'actionneur, qu'il s'agisse d'un professionnel ou d'un utilisateur final.

## Revendications

1. Actionneur (10) d'un écran domotique comprenant une unité de traitement (30) permettant le pilotage du déplacement d'une extrémité mobile de l'écran entre deux positions de fin de course, ladite unité de traitement étant supportée par un circuit imprimé (31) et comprenant au moins un moyen de basculement (32) qui, une fois activé et alors qu'un signal est transmis à l'unité de traitement (30) via le circuit imprimé (31), permet de faire basculer (130) l'unité de traitement dans un mode d'apprentissage d'au moins une position de fin de course, **caractérisé en ce que**
- cet actionneur (10) comprend un logement (11) destiné à recevoir un moyen d'activation (22) dans une configuration où le moyen d'activation, mis en place dans le logement, agit directement sur le moyen de basculement (32) pour l'activer, en étant proche du moyen de basculement et sans être en contact direct avec celui-ci, ce moyen d'activation (22) faisant partie d'un outil de configuration (20) qui peut être utilisé pour faire basculer les unités de traitement (30) de plusieurs actionneurs (10) en mode d'apprentissage, en étant successivement introduit dans les logements (11) de ces actionneurs,
- une paroi d'isolation (12) formant un fond du logement est disposée entre le moyen de basculement (32) et le moyen d'activation (22) reçu dans le logement (11),
- le moyen de basculement est un élément (32) réagissant à la présence d'un aimant (21) ou à un flux lumineux et
- le moyen d'activation (22) est une surface active terminale d'un aimant (21), disposée en extrémité de l'outil de configuration (20), ou un flux lumineux, le moyen de basculement (32) étant activé par le moyen d'activation (22) à travers la paroi d'isolation.

2. Actionneur selon la revendication 1 **caractérisé en ce que** le logement (11) est disposé par rapport au moyen de basculement (32) de telle sorte que, lorsque le moyen d'activation (22) est reçu dans le logement, la distance entre le moyen d'activation et le moyen de basculement est inférieure à 40 mm.

3. Actionneur selon l'une des revendications 1 ou 2 **caractérisé en ce que** le moyen d'activation (22) est constitué par un aimant (21) et **en ce qu'**un anneau ferromagnétique, destiné à pré-orienter l'aimant, est prévu à l'entrée du logement (11)

4. Actionneur selon l'une des revendications 1 à 3 **caractérisé en ce que** l'unité de traitement comprend deux moyens de basculement (32), un pour chaque position de fin de course à régler.

5. Actionneur selon l'une des revendications 1 à 4 **caractérisé en ce que** le moyen de basculement (32) est disposé sur un circuit imprimé (31) qui supporte l'unité de traitement (30).

6. Procédé de configuration de plusieurs actionneurs d'écrans domotiques, chacun des actionneurs étant conforme à une des revendications 1 à 6, chaque actionneur comprenant une unité de traitement électronique (30) permettant le pilotage du déplacement d'une extrémité mobile de l'écran entre deux positions de fin de course, ladite unité de traitement étant apte à basculer (130) dans un mode d'apprentissage d'au moins une position de fin de course par l'activation d'un moyen de basculement spécifique (32), le procédé étant **caractérisé en ce qu'**il comprend une étape consistant à :
a) déplacer (110) un moyen d'activation (22), formé par une surface active terminale d'un aimant (21) ou un flux lumineux, jusqu'à une position d'activation où ledit moyen d'activation, mis en place dans un logement (11) d'un actionneur (10), agit directement sur le moyen de basculement (32), à travers une paroi de fond (12) de ce logement, en étant proche de ce moyen de basculement et sans être en contact direct avec celui-ci,
et **en ce que** cette étape a) est répétée pour les différents actionneurs.

7. Procédé de configuration d'actionneurs selon la revendication 6 **caractérisé en ce qu'**il comprend une étape b) postérieure à l'étape a) et consistant à :
b) basculer l'unité de traitement (30) en mode d'apprentissage uniquement si la distance (d) entre le moyen d'activation (22) et le moyen de basculement (32) a une valeur inférieure à une valeur prédéterminée (do)

8. Procédé de configuration d'actionneurs selon l'une des revendications 6 ou 7 **caractérisé en ce qu'**il comprend en outre des étapes consistant à :
c) positionner l'écran (140) de manière à ce que la position de l'extrémité mobile corresponde à une position de fin de course souhaitée, et
d) exécuter (150) une opération de validation de l'enregistrement de la fin de course.

9. Procédé de configuration d'actionneurs selon la revendication 8 **caractérisé en ce que** l'opération de validation consiste à désactiver (250) le moyen de basculement (32) et/ou exécuter un ordre spécifique (350) à partir d'un organe de commande de l'actionneur.

10. Procédé de configuration d'actionneurs selon l'une des revendications 6 à 9 **caractérisé en ce que** l'étape d) permet à l'unité de traitement (30) de sortir du mode d'apprentissage (180).

11. Procédé de configuration d'actionneurs selon l'une des revendications 6 à 10 **caractérisé en ce que** l'étape a) ou d) est réalisée dès que le moyen d'activation (22) est continuellement à proximité du moyen de basculement (32) pendant une période de temps (Δt₁) déterminée.

12. Procédé de configuration d'actionneurs selon l'une des revendications 6 à 11 **caractérisé en ce que** le moyen de basculement (32) est un élément réagissant à un champ magnétique qui est activé par un champ magnétique induit par la surface active terminale (22) de l'outil de conformation (20).

13. Outil de configuration d'actionneurs pour un écran domotique, cet outil comprenant un moyen d'activation (22) formé par une surface active terminale d'un aimant (21) et monté à l'extrémité d'une tige (23), ledit moyen d'activation permettant d'activer un moyen de basculement (32) d'un actionneur selon l'une des revendications 1 à 5, en mettant en oeuvre le procédé de l'une des revendications 6 à 12.

14. Outil de configuration selon la revendication 13 **caractérisé en ce que** la tige (23) est flexible et/ou articulée.

## Patentansprüche

1. Stellvorrichtung (10) einer gebäudetechnischen Schutzabdeckung, eine Verarbeitungseinheit (30) umfassend, die die Steuerung einer Bewegung eines beweglichen Endes der Schutzabdeckung zwischen zwei Endlagenpositionen ermöglicht, wobei die Verarbeitungseinheit von einem gedruckten Schaltkreis (31) abgestützt wird und mindestens ein Umschaltmittel (32)umfasst, das, sobald es aktiviert ist und ein Signal an die Verarbeitungseinheit (30) über den gedruckten Schaltkreis (31) übertragen wird, ein Umschalten der Verarbeitungseinheit in einen Lernmodus (130) mindestens einer Endlagenposition ermöglicht, **dadurch gekennzeichnet, dass**
- diese Stellvorrichtung (10) einen Aufnahmeraum (11) umfasst, der vorgesehen ist, ein Aktivierungsmittel (22) in einer Konfiguration aufzunehmen, in der das in den Aufnahmeraum eingebrachte Aktivierungsmittel direkt auf das Umschaltmittel (32) einwirkt, um es zu aktivieren, wobei es dabei nahe dem Umschaltmittel ist und nicht in direktem Kontakt mit diesem ist, wobei das Aktivierungsmittel (22) Teil eines Konfigurationswerkzeuges (20) ist, das verwendet werden kann, um die Verarbeitungseinheiten (30) von mehreren Stellvorrichtungen (10) in den Lernmodus umzuschalten indem es aufeinanderfolgend in die Aufnahmeräume (11) dieser Stellvorrichtungen eingeführt wird,
- eine Isolierwand (12), die einen Boden des Aufnahmeraum bildet, zwischen dem Umschaltmittel (32) und dem Aktivierungsmittel (22), das in dem Aufnahmeraum (11) aufgenommen ist, angeordnet ist,
- wobei das Umschaltmittel ein Element (32) ist, das auf das Vorhandensein eines Magneten (21) oder auf einen Lichtstrom reagiert und
- das Aktivierungsmittel (22) eine aktive Endfläche eines Magneten (21), der am Ende des Konfigurationswerkzeuges (20) angeordnet ist, oder ein Lichtstrom ist, wobei das Umschaltmittel (32) von dem Aktivierungsmittel (22) durch die Isolierwand hindurch aktiviert wird.

2. Stellvorrichtung nach Anspruch 1, **dadurch gekennzeichnet, dass** der Aufnahmeraum (11) in Bezug auf das Umschaltmittel (32) derart angeordnet ist, dass, wenn das Aktivierungsmittel (22) in dem Aufnahmeraum aufgenommen ist, die Entfernung zwischen dem Aktivierungsmittel und dem Umschaltmittel kleiner als 40 mm ist.

3. Stellvorrichtung nach einem der Ansprüche 1 oder 2, **dadurch gekennzeichnet, dass** das Aktivierungsmittel (22) von einem Magneten (21) gebildet wird und dass ein ferromagnetischer Ring, der vorgesehen ist, den Magneten vorauszurichten, am Eingang des Aufnahmeraum (11) vorgesehen ist.

4. Stellvorrichtung nach einem der Ansprüche 1 bis 3, **dadurch gekennzeichnet, dass** die Verarbeitungseinheit zwei Umschaltmittel (32) umfasst, eines für jede einzustellende Position der Endlage.

5. Stellvorrichtung nach einem der Ansprüche 1 bis 4, **dadurch gekennzeichnet, dass** das Umschaltmittel (32) an dem gedruckten Schaltkreis (31) angeordnet ist, der die Verarbeitungseinheit (30) abstützt.

6. Verfahren zur Konfiguration mehrerer Stellvorrichtungen gebäudetechnischer Schutzabdeckungen, wobei jede der Stellvorrichtungen entsprechend einem der Ansprüche 1 bis 6 ausgebildet ist und jede Stellvorrichtung eine elektronische Verarbeitungseinheit (30) umfasst, die die Steuerung einer Bewegung eines beweglichen Endes der Schutzabdeckung zwischen zwei Endlagenpositionen gestattet, wobei die Verarbeitungseinheit geeignet ist, in einen Lernmodus mindestens einer Endlagenposition durch die Aktivierung eines spezifischen Umschaltmittels (32) umzuschalten (130), wobei das Verfahren **dadurch gekennzeichnet ist, dass** es einen Schritt umfasst, der darin besteht:
a) ein Aktivierungsmittel (22), das von einer aktiven Endfläche eines Magneten (21) oder einem Lichtstrom gebildet wird, bis zu einer Aktivierungsposition zu bewegen, in der das Aktivierungsmittel, das in einen Aufnahmeraum (11) einer Stellvorrichtung (10) eingebracht ist, direkt auf das Umschaltmittel (32) durch eine Wand des Bodens (12) dieses Aufnahmeraumraums hindurch wirkt, wobei es nahe zu diesem Umschaltmittel ist und nicht in direktem Kontakt mit diesem ist,
und das dieser Schritt a) für die verschiedenen Stellvorrichtungen wiederholt wird.

7. Verfahren zur Konfiguration von Stellvorrichtungen nach Anspruch 6, **dadurch gekennzeichnet, dass** es einen Schritt b) nach dem Schritt a) umfasst, der darin besteht:
b) die Verarbeitungseinheit (30) in den Lernmodus nur dann umzuschalten, wenn der Abstand (b) zwischen dem Aktivierungsmittel (22) und dem Umschaltmittel (32) einen Wert aufweist, der kleiner ist als ein vorbestimmter Wert (d₀).

8. Verfahren zur Konfiguration von Stellvorrichtungen nach einem der Ansprüche 6 oder 7, **dadurch gekennzeichnet, dass** es außerdem die Schritte umfasst, die darin bestehen:
c) die Schutzabdeckung derart zu positionieren (140), dass die Position des beweglichen Endes einer gewünschten Endlagenposition entspricht und
d) einen Überprüfungsvorgang der Speicherung der Endlage durchzuführen (150).

9. Verfahren zur Konfiguration von Stellvorrichtungen nach Anspruch 8, **dadurch gekennzeichnet, dass** die Überprüfungsvorgang darin besteht, das Umschaltmittel (32) zu deaktivieren (250) und/oder eine spezifische Reihenfolge mittels eines Steuerelements der Stellvorrichtung durchzuführen (350).

10. Verfahren zur Konfiguration von Stellvorrichtungen nach einem der Ansprüche 6 bis 9, **dadurch gekennzeichnet, dass** der Schritt d) der Verarbeitungseinheit (30) erlaubt, den Lernmodus zu verlassen (180).

11. Verfahren zur Konfiguration von Stellvorrichtungen nach einem der Ansprüche 6 bis 10, **dadurch gekennzeichnet, dass** der Schritt a) oder b) durchgeführt wird, sobald das Aktivierungsmittel (22) kontinuierlich in der Nähe des Umschaltmittels (32) während eines bestimmten Zeitraums (Δt₁) ist.

12. Verfahren zur Konfiguration von Stellvorrichtungen nach einem der Ansprüche 6 bis 11, **dadurch gekennzeichnet, dass** das Umschaltmittel (32) ein Element ist, das auf ein Magnetfeld wirkt, das durch ein Magnetfeld aktiviert wird, das durch die aktive Endfläche (22) des Konfigurationswerkzeugs (20) aktiviert wird.

13. Werkzeug zur Konfiguration von Stellvorrichtungen für eine gebäudetechnische Schutzvorrichtung, wobei dieses Werkzeug ein Aktivierungsmittel (22) umfasst, das von einer aktiven Endfläche eines Magneten (21) gebildet wird und in der Nähe eines Stabes (23) montiert ist, wobei das Aktivierungsmittel eine Aktivierung eines Umschaltmittels (32) einer Stellvorrichtung nach einem der Ansprüche 1 bis 5 ermöglicht, wobei das Verfahren nach einem der Ansprüche 6 bis 12 durchgeführt wird.

14. Werkzeug zur Konfiguration nach Anspruch 13, **dadurch gekennzeichnet, dass** der Stab (23) flexibel und/oder gelenkig ist.

## Claims

1. Actuator (10) for a home automation screen comprising a processing unit (30) allowing control of the displacement of a mobile end of the screen between two limit of travel positions, said processing unit being supported by a printed circuit (31) and comprising at least one switching means (32) which, once activated and when a signal has been transmitted to the processing unit (30) via the printed circuit (31), makes it possible to switch (130) the processing unit into a learning mode of at least one limit of travel position, **characterised in that**
- this actuator (10) comprises a housing (11) which is intended to receive an activation means (22) in a configuration where the activation means, positioned in the housing, acts directly on the switching means (32) in order to activate it, being near the switching means and without being in direct contact with the latter, this activation means (22) being part of a configuration tool (20) which can be used for switching the processing units (30) of a plurality of actuators (10) in learning mode, being successively introduced into the housings (11) of these actuators,
- an insulating wall (12) forming a base of the housing is disposed between the switching means (32) and the activation means (22) s received in the housing (11),
- the switching means is an element (32) which reacts to the presence of a magnet (21) or to a luminous flux and
- the activation means (22) is a terminal active surface of a magnet (21), disposed at the end of the configuration tool (20), or a luminous flux, the switching means (32) being activated by the activation means (22) through the insulating wall.

2. Actuator according to claim 1, **characterised in that** the housing (11) is disposed relative to the switching means (32) such that, when the activation means (22) is received in the housing, the distance between the activation means and the switchting means is less than 40 mm.

3. Actuator according to one of the claims 1 or 2, **characterised in that** the activation means (22) is formed by a magnet (21) and **in that** a ferromagnetic ring which is intended to pre-orientate the magnet is provided at the entrance to the housing (11).

4. Actuator according to one of the claims 1 to 3, **characterised in that** the processing unit comprises two switching means (32), one for each limit of travel position to be set.

5. Actuator according to one of the claims 1 to 4, **characterised in that** the switching means (32) is disposed on a printed circuit (31) which supports the processing unit (30).

6. Method for configuring a plurality of actuators of home automation screens, each of the actuators being according to one of the claims 1 to 6, each actuator comprising an electronic processing unit (30) allowing control of the displacement of a mobile end of the screen between two limit of travel positions, said processing unit being able to switch (130) into a learning mode of at least one limit of travel position by activation of a specific switching means (32), the method being **characterised in that** it comprises a step consisting of:
a) displacing (110) an activation means (22), formed by a terminal active surface of a magnet (21) or a luminous flux, as far as an activation position where said activation means, positioned in a housing (11) of an actuator (10), acts directly on the switching means (32), through a base wall (12) of this housing, being near this switching means and without being in direct contact with the latter,
and **in that** this step a) is repeated for the various actuators.

7. Method for configuring actuators according to claim 6, **characterised in that** it comprises a step b) subsequent to step a) and consisting of:
b) switching the processing unit (30) into learning mode only if the distance (d) between the activation means (22) and the switching means (32) has a value less than a predetermined value (do).

8. Method for configuring actuators according to one of the claims 6 or 7, **characterised in that** it comprises furthermore steps consisting of:
c) positioning the screen (140) such that the position of the mobile end corresponds to a desired limit of travel position, and
d) executing (150) an operation for validating the recording of the limit of travel.

9. Method for configuring actuators according to claim 8, **characterised in that** the validation operation consists of deactivating (250) the switching means (32) and/or executing a specific order (350) from a control member of the actuator.

10. Method for configuring actuators according to one of the claims 6 to 9, **characterised in that** step d) makes it possible for the processing unit (30) to leave the learning mode (180).

11. Method for configuring actuators according to one of the claims 6 to 10, **characterised in that** step a) or d) is performed as soon as the activation means (22) is continually near the switching means (32) for a determined period of time (Δt₁).

12. Method for configuring actuators according to one of the claims 6 to 11, **characterised in that** the switching means (32) is an element which reacts to a magnetic field and which is activated by a magnetic field induced by the terminal active surface (22) of the configuration tool (20).

13. Tool for configuring actuators for a home automation screen, this tool comprising an activation means (22) formed by a terminal active surface of a magnet (21) and mounted at the end of a rod (23), said activation means making it possible to activate a switchting means (32) of an actuator according to one of the claims 1 to 5, by implementing the method of one of the claims 6 to 12.

14. Tool for configuration according to claim 13, **characterised in that** the rod (23) is flexible and/or articulated.
